# EUROPEAN PATENT SPECIFICATION

(11) **EP 4 169 750 B1**
(45) Date of publication and mention of the grant of the patent: **09.07.2025**
(21) Application number: 22197749.9
(22) Date of filing: 26.09.2022
(51) Int. Cl.: H01F 7/08, H01F 7/16, B60G 17/015, B60G 17/08, F16F 9/46, H01F 7/11

(54) **A VEHICLE SUSPENSION SYSTEM WITH A SOLENOID ASSEMBLY CONNECTED TO THE DAMPER PISTON ROD**
FAHRZEUGAUFHÄNGUNGSSYSTEM MIT EINER MIT DER DÄMPFERKOLBENSTANGE VERBUNDENEN SPULENANORDNUNG
SYSTÈME DE SUSPENSION DE VÉHICULE AVEC UN ASSEMBLAGE DE SOLÉNOÏDE CONNECTÉ À LA TIGE DE PISTON DE L'AMORTISSEUR

(30) Priority: 01.10.2021 US 202117492534; 08.08.2022 CN 202210945812
(43) Date of publication of application: 26.04.2023
(73) Proprietor: BeijingWest Industries Co., Ltd., Beijing 102400 (CN)
(72) Inventor: GRAJEDA, Yinko I, 3100 Research Blvd,Kettering, Ohio, 45420 (US)
(74) Representative: Lukaszyk, Szymon

(56) References cited:
- CN-A- 111 942 095
- KR-A- 20040 049 230
- US-A1- 2012 279 815
- US-B2- 10 746 247

## Description

### Field of the Invention

The present invention generally relates to a suspension system with a solenoid assembly.

### Description of the Prior Art

Vehicles, such as automobiles, typically have a suspension system that includes absorber units that are mounted between wheels of the vehicle and a vehicle body or substructure. The suspension system is generally configured based on vehicle integration to keep wheels in contact with a driving surface by absorbing energy from forces on the wheels or other portions of the vehicle. As technology continues to evolve, various types of absorber units have been developed. One particularly popular type of absorber unit is configured to be operable in one of two different stiffness settings. The two different stiffness settings may also be known as "comfort mode" and "sport mode," respectfully.

One such prior art absorber unit is disclosed in U.S. Pat. No. 10,746,247. The absorber unit includes a piston assembly disposed on a center axis. The piston assembly includes a piston rod disposed on the center axis and attached to a piston head. A regulator is attached to the piston rod and defines a compartment to receive the piston head. The regulator has a first aperture and a second aperture. A restrictor divides the compartment into a first and second portion. An actuator is disposed in the compartment and movable between an opened and a closed position. A coil is disposed about a core for generating an electromagnetic field to switch between the operational stiffness settings. When switching between stiffness settings, instability and system behavior deviates from either comfort or sport modes as a result of a magnetic force ripple reacting to a varying input frequency to the coil.

Accordingly, there is a continuing desire to improve upon the operational framework and efficiency of suspension systems that offer switchable modes of stiffness with a reduction in force ripple reaction.
Document KR20040049230A discloses a piston valve device of damper using magneto-rheological fluid. A piston valve apparatus comprises a core having a through hole including the threaded part, a flange, and a fitting sill; a bobbin installed around the core; a solenoid installed in the bobbin to form the magnetic field in applying current; a pole piece fitted from the lower part of the core to the fitting sill to support the lower part of the bobbin and to control damping force by forming the magnetic path flowing the magnetic field from the solenoid; a piston rod combined with the threaded part of the through hole of the core, and composed of a cable passage; a cable electrically connected to the solenoid via the through hole of the core from the cable passage of the piston rod; an upper plate having plural oil pass holes, and keeping the concentricity of the piston rod and the piston valve with fitting to the upper flange of the core; a supporter fitted to the lower part of the core to support the core and the pole piece; an inverse U-shaped flux ring composed of plural oil pass holes, and combined with the upper part of the upper plate to keep the closed loop of the magnetic field from the solenoid; an upper seal fitted to the upper plate to prevent outflow of magneto-rheological fluid; a cap nut thread-connected to the lower part of the core to combine the piston valve; and a piston band combined with the upper edge of the flux ring.
Document US10746247B2 discloses a dual ride damper assembly. A piston assembly for a damper includes a main piston disposed on a center axis. A piston rod is attached to the main piston. A regulator extends between the piston rod and the main piston defining a compartment. The regulator has at least one first aperture and at least one second aperture. A restrictor divides the compartment into a first and second portion. An actuator having a core is disposed in the first portion movable between an opened and a closed position. The restrictor includes a sleeve disposed in the compartment and attached to the regulator. The sleeve defines a hole in fluid communication with the first and second portions and flares outwardly in the first portion toward the regulator to define a slanted edge extending at an oblique angle relative to the center axis to allow the working fluid to flow smoothly thereby limiting noises generated.

### Summary of the Invention

The foregoing has outlined rather broadly the features and technical advantages of the present invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other embodiments for carrying out the same purposes of the present invention. It should also be realized by those skilled in the art that such embodiments do not depart from the invention as set forth in the appended claims. This section provides a general summary of the disclosure and is not to be interpreted as a complete and comprehensive listing of all of the objects, aspects, features and advantages associated with the present disclosure.

The invention provides for suspension system with a solenoid assembly that improves upon the operational framework and efficiency of suspension systems that offer switchable modes of stiffness by providing an induction plate that reduces or eliminates magnetic force ripple caused by a varying input frequency to a coil.

It is one unclaimed aspect of the present invention to provide a solenoid assembly of a suspension system of an associated vehicle. The solenoid assembly comprises a core including a core head and a core body. A spool extends about the core body and defines a space. A coil is wrapped around the spool within the space and an induction plate is at least partially located between the spool and the core head.

It is another aspect of the present invention to provide a suspension system of an associated vehicle. The suspension system comprises an outer reservoir tube extending along an axis between a first end and a second end and defining a chamber. A piston assembly is at least partially located in the chamber. The piston assembly includes a piston rod and a piston head. A solenoid assembly is connected to the piston rod and includes a body defining a compartment. The solenoid assembly comprises a core including a core head and a core body, and located in the compartment. A spool extends about the core body and defines a space. A coil is wrapped around the spool within the space. An induction plate is at least partially located between the spool and the core head. An actuator is at least partially located in the compartment adjacent to the core and movable between a closed position and an open position, wherein the body defines at least one first aperture and at least one second aperture axially spaced from the at least one first aperture, wherein in the closed position, the actuator restricts a fluid flow from at least one of the first aperture and the second aperture to provide a stiffer damping property, and in the open position, permits the fluid flow through the at least one first aperture and the at least one second aperture to provide a less-stiff damping property.

Further areas of applicability will become apparent from the description provided herein. The description and specific examples in this summary are intended for purposes of illustration only and are not intended to limit the scope of the present disclosure.

### Brief Description of the Drawings

Other advantages of the present invention will be readily appreciated, as the same becomes better understood by reference to the following detailed description when considered in connection with the accompanying drawings wherein:
Fig. 1 is a perspective view of a suspension system in accordance with principles of the present disclosure;
Fig. 2 is a perspective view of a piston assembly of the suspension system from Fig. 1;
Fig. 3 is a sectional perspective view of a piston head of the piston assembly from Fig. 2; and
Fig. 4 is a cross-sectional side view of the piston head from Fig. 3 illustrating a solenoid assembly and an induction plate.

### Description of the Enabling Embodiment

Example embodiments will now be described more fully with reference to the accompanying drawings. In general, the subject embodiments are directed to a suspension system of an associated vehicle and in particular to the solenoid assembly thereof.

However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Referring to the drawing, wherein like numerals indicate corresponding parts throughout the several views, a suspension system including a solenoid assembly is provided. The solenoid assembly improves upon the operational framework and efficiency of suspension systems that offer switchable modes of stiffness by providing an induction plate that reduces or eliminates magnetic force ripple that is caused by a varying input frequency to a coil.

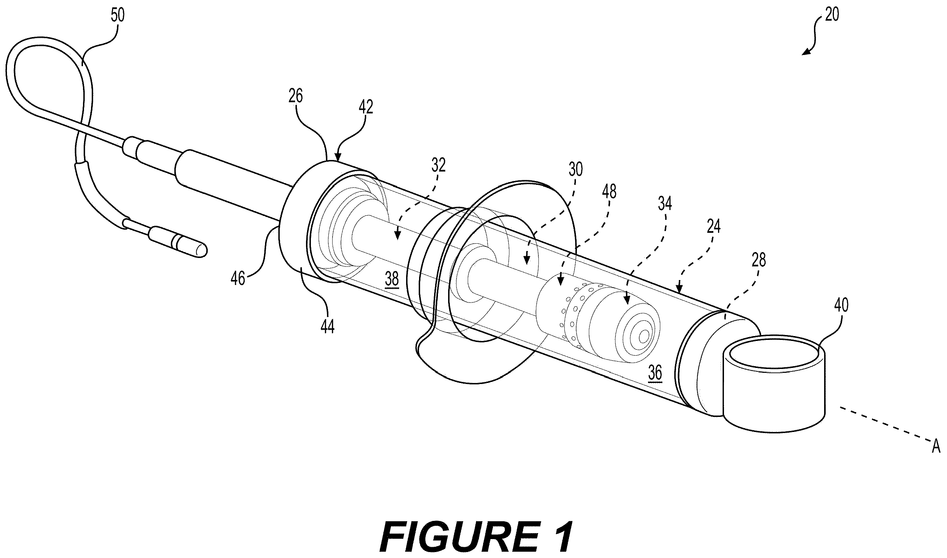

With initial reference to Fig. 1, the suspension system 20 includes an outer reservoir tube 24 defining a chamber 36, 38. The outer reservoir tube 24 extends along an axis A between a first end 26 and a second end 28. The suspension system 20 includes a piston assembly 30 located in the chamber 36, 38 and extending along the axis A. The piston assembly 30 includes a piston rod 32 extending to a piston head 34 that is sized similar to an inner diameter of the reservoir tube 24. The piston head 34 divides the chamber 36, 38 into a compression chamber 36 and a rebound chamber 38. The compression chamber 36 is located between the second end 28 and the piston head 34 and the rebound chamber 38 is located between the first end 26 and the piston head 34. In operation, the piston head 34 travels from the first end 26 towards the second end 28 during compression (i.e., in a compression direction) and from the second end 28 towards the first end 26 during rebound (i.e., in a rebound direction). An attachment ring 40 may be located on the second end 28 to connect the suspension system 20 to an associated vehicle. A rod guide sleeve 42 may be located on the first end 26. The rod guide sleeve 42 includes an axially extending portion 44 that hugs an outer surface reservoir tube 24 and a radially extending portion 46 that covers the first end 26. The radially extending portion 46 defines an opening for slideably accommodating and guiding the piston rod 32.

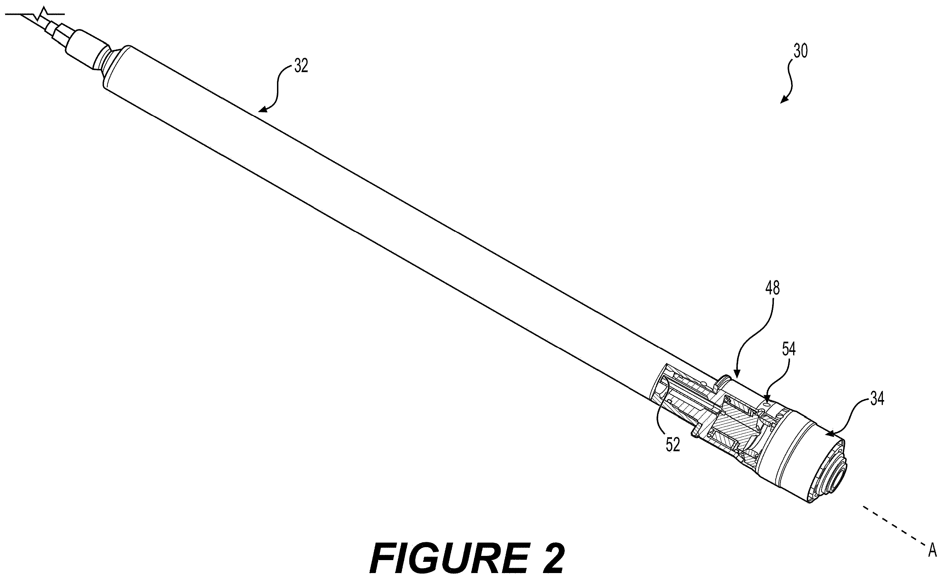

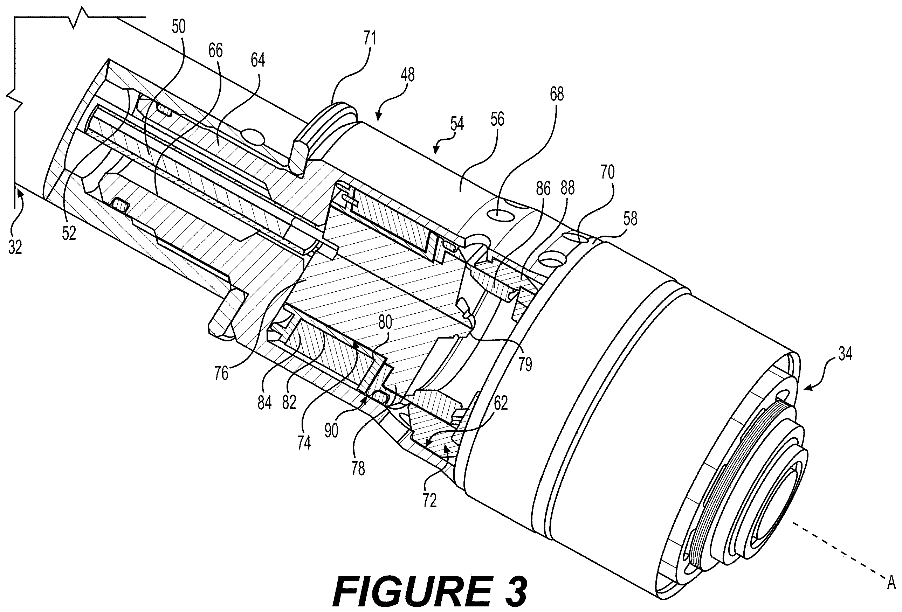

A solenoid assembly 48 extends between a distal end of the piston rod 32 and the piston head 34 connecting the piston head 34 with the piston rod 32 facilitating the piston rod 32 to move the piston head 34 between a compression stroke and a rebound stroke. A cable 50 is electrically connected to the solenoid assembly 48 through a channel 52 (cf. Figs. 2 and 3) defined by the piston rod 32 for providing an electric current to the solenoid assembly 48 to generate an electromagnetic field.

Fig. 2 is a perspective view of the piston assembly 30 including a portion of the piston head 34 and solenoid assembly 48 cutout to show internal components therein. Fig. 3 is an enlarged view of the piston head 34 and solenoid assembly 48 from Fig. 2. The solenoid assembly 48 includes a body 54, having a generally cylindrical shape, and having a top portion 56, also having a generally circular shape, disposed adjacent to the distal end of the piston rod 32. The top portion 56 extends annularly about the center axis A and radially outwardly from the center axis A. The body 54 further includes a bottom portion 58 extending radially outwardly from the top portion 56, annularly about the center axis A, to a proximal end 60. The body 54 defines a compartment 62 extending between the top portion 56 and the proximal end 60 to receive the piston head 34. Stated another way, the bottom portion 58 extends between the piston head 34 and the piston rod 32 connecting the piston head 34 and the piston rod 32. In some embodiments, the body 54 may further include a collar portion 64, having a generally cylindrical shape, disposed in the channel 52 of the piston rod 32 and extending along the axis A to connect the body 54 to the piston rod 32. The collar portion 64 may further define a collar channel 66 extending along center axis A for receiving the cable 50 and connecting the cable 50 to the solenoid assembly 48. In some embodiments, the body 54 defines at least one first aperture 68 and at least one second aperture 70 axially spaced from the at least one first aperture 68. In some embodiments, the at least one first aperture 68 includes a plurality of axially aligned and circumferentially arrayed first apertures 68. In some embodiments, the at least one second aperture 70 includes a plurality of axially aligned and circumferentially arrayed second apertures 70. A bearing ring 71 may be located between an outer surface of the top portion 56 and the piston rod 32.

An actuator 72 is at least partially located in the compartment 62. The actuator 72 is movable between a closed position and an open position. In the closed position, the actuator 72 restricts a fluid flow from at least one of the first apertures 68 and the second apertures 70 for providing a stiffer absorption property. In the open position, the fluid flow through the first apertures 68 and the second apertures 70 is unrestricted for providing a less-stiff absorption property.

The solenoid assembly 48 includes a core 74 located in the compartment 62 adjacent to the actuator 72. The core 74 may define a core body 76 that extends towards the piston head 32 to a core head 78 extending radially outwardly from the core body 76. A protrusion 79 may extend axially from the core head 78 opposite the core body 76. A spool 80 extends about the core body 76 and defines a space 82 for locating a coil 84 that is wrapped therearound to define ring-shaped winding having an inner diameter and an outer diameter. The cable 50 electrically connects to the coil 84 to generate an electromagnetic field. The actuator 72 includes a plunger 86 abutting the core head 78 opposite the core body 76. In some embodiments, the plunger 86 defines and outer diameter that is equal to an outer diameter of the core head 78. The plunger 86 extends from the core head 78 towards the second end 28. A plunger guide 88 extends about the plunger 86 in hugging engagement therewith. In some embodiments, the plunger 86 may be formed of a magnetic material such that the plunger 86 is moved between an open position and a closed position based on the presence of an electromagnetic field. In some embodiments, the plunger guide 88 may guide a magnetic flux to the plunger 86. More particularly, in the closed position, the plunger 86 is moved towards the core 74 to restrict fluid flow through at least one of the first apertures 68 and the second apertures 70 to provide stiffer damping properties. In the open position, the plunger 86 is moved away from the core 74 to permit fluid flow through the first apertures 68 and the second apertures 70 to provide less-stiff or softer damping properties.

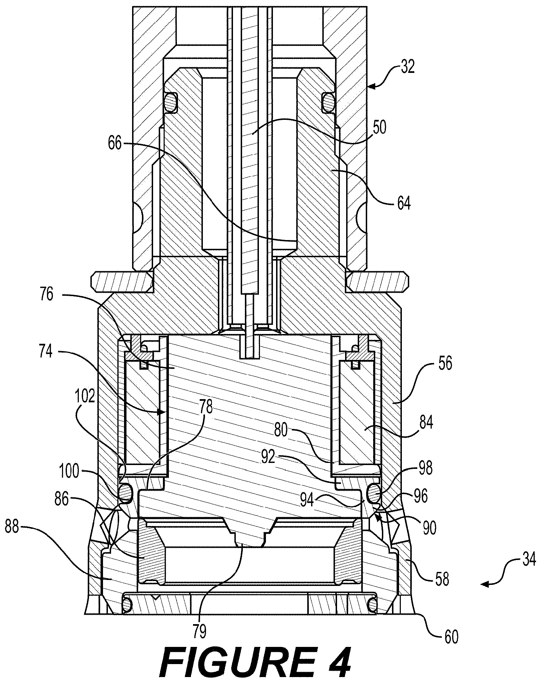

With reference now to Fig. 3 and Fig. 4, further details of the solenoid assembly 48 will be further described. The solenoid assembly 48 includes an induction plate 90 located under the coil 84. The induction plate 90 may be annularly shaped and located in abutment with the spool 80. The induction plate 90 may be formed of stainless steel, steel alloy, Aluminum, Aluminum alloy, Copper, or Copper Alloy. In some embodiments, the induction plate 90 is formed of a material with a conductivity of at least 1,100,00 Siemens/m, a steel material with a conductivity of 1,100,000 Siemens/m, Aluminum material with a conductivity of 38,000,000 Siemens/m, a Copper material with a conductivity of 58,700,000 Siemens/m, or a combination thereof. The induction plate 90 includes a top ring portion 92 that is sandwiched between the spool 80 and the core head 78. The top ring portion 92 may include an inner diameter that is located radially inwardly from the inner diameter of the wrapping of the coil 84. The top ring portion 92 may further include an outer diameter that is located radially outwardly from the outer diameter of the wrapping of the coil 84. In some embodiments, the outer diameter of the top ring portion 92 abuts the bottom portion 58 of the body 54 and the inner diameter of the top ring portion 92 abuts outer diameter of the core body 76. The induction plate 90 may further include a bridge portion 94 extending axially towards the second end 28 and away from the coil 84. The bridge portion 94 may be in hugging engagement with an outer diameter of the core head 78 and spaced from the bottom portion 58 of the body 54. A hook portion 96 extends radially outwardly from the bridge portion 94 and into abutment with the bottom portion 58 of the body 54. An O-ring ring 98 is located in a space defined by the top ring portion 92, the bridge portion 94, the hook portion 96, and the bottom portion 58 of the body 54. In some embodiments, at least one first weld interface 100 may be located between the induction plate 90 and the core 74. In some embodiments, at least one second weld interface 102 may be located between the induction plate 90 and the body 54. Therefore, the induction plate 90 may hermetically seal portions of the solenoid assembly 48 from fluid.

In operation, an associated controller dictates current supply to the coil 84. In some embodiments, this current supply is approximately 2kHz frequency. As current is supplied to the coil 84, a magnetic field buildup and decay occurs as the current is modulated. This magnetic field buildup and decay results in the induction of eddy currents throughout the solenoid assembly 48. The eddy current induces an opposing magnetic field in the induction plate 90 attenuating the force ripples of the magnetic field buildup and decay.

It should be appreciated that the foregoing description of the embodiments has been provided for purposes of illustration. In other words, the subject disclosure it is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varies in many ways. Such variations are not to be regarded as a departure from the disclosure, and all such modifications are intended to be included within the scope of disclosure.

## Claims

1. A suspension system (20) of an associated vehicle, the suspension system (20) comprising:
an outer reservoir tube (24) extending along an axis (A) between a first end (26) and a second end (28) and defining a chamber (36, 38); and
a piston assembly (30) at least partially located in the chamber (36, 38), the piston assembly (30) including a piston rod (32) and a piston head (34);
**characterized in that** the suspension system (20) further comprises a solenoid assembly (48) connected to the piston rod (32) and including a body (54) having a generally cylindrical shape, and having a top portion (56), also having a generally circular shape, disposed adjacent to the distal end of the piston rod (32), the top portion (56) extending annularly about the axis (A) and radially outwardly from the axis (A), the body (54) further including a bottom portion (58) extending radially outwardly from the top portion (56), annularly about the axis (A), to a proximal end (60), the body (54) defining a compartment (62) extending between the top portion (56) and the proximal end (60) to receive the piston head (34),
wherein the solenoid assembly (48) comprises:
a core (74) including a core head (78) and a core body (76) and located in the compartment (62);
a spool (80) extending about the core body (76) and defining a space (82);
a coil (84) wrapped around the spool (80) within the space (82); and
an induction plate (90) at least partially located between the spool (80) and the core head (78),
wherein an actuator (72) is at least partially located in the compartment (62) adjacent to the core (74) and movable between a closed position and an open position, wherein the body (54) defines at least one first aperture (68) and at least one second aperture (70) axially spaced from the at least one first aperture (68), wherein in the closed position, the actuator (72) restricts a fluid flow from at least one of the first aperture (68) and the second aperture (70) to provide a stiffer damping property, and in the open position, permits the fluid flow through the at least one first aperture (68) and the at least one second aperture (70) to provide a less-stiff damping property.

2. The suspension system (20) as set forth in claim 1, wherein the induction plate (90) includes a top ring portion (92) located between the spool (80) and the core head (78).

3. The suspension system (20) as set forth in claim 2, wherein the top ring portion (92) includes an inner diameter that is located radially inwardly from an inner diameter of a wrapping of the coil (84).

4. The suspension system (20) as set forth in claim 3, wherein the top ring portion (92) includes an outer diameter that is located radially outwardly from an outer diameter of the wrapping of the coil (84).

5. The suspension system (20) as set forth in any one of claims 2 to 4, wherein the induction plate (90) includes a bridge portion (94) extending from the top ring portion (92) in hugging engagement around the core head (78) towards the second end (28) and away from the coil (84).

6. The suspension system (20) as set forth in claim 5, wherein the induction plate (90) further includes a hook portion (96) extending radially outwardly from the bridge portion (94).

7. The suspension system (20) as set forth in claim 6, wherein a space is defined between the hook portion (96) and the bridge portion (94) and wherein an O-ring (98) is located in the space.

8. The suspension system (20) as set forth in any one of claims 1 to 7, wherein a weld interface (100) is located between and connects the induction plate (90) and the core (74).

9. The suspension system (20) as set forth in any one of claims 1 to 8, wherein the induction plate (90) is formed of a material having a conductivity of at least 1,100,000 Siemens/m.

10. The suspension system (20) as set forth in claim 9, wherein the induction plate (90) is formed of Copper.

11. The suspension system (20) as set forth in claim 9, wherein the induction plate (90) is formed of Aluminum.

12. The suspension system (20) as set forth in claim 9, wherein the induction plate (90) is formed of stainless steel.

13. The suspension system (20) as set forth in claim 12, wherein the body (54) extends about the spool (80), the core (74), and the induction plate (90), wherein the body (54) includes a collar portion (64) defining a collar channel (66) for accommodating a provided cable (50) to electrically connect to the coil (84).

## Patentansprüche

1. Ein Aufhängungssystem (20) eines zugehörigen Fahrzeugs, wobei das Aufhängungssystem (20) aus Folgendem besteht:
einem äußeren Reservoirrohr (24), das sich entlang einer Achse (A) zwischen einem ersten Ende (26) und einem zweiten Ende (28) erstreckt und eine Kammer (36, 38) definiert; und einen Kolbenkopf (34) aufweist;
eine Kolbenbaugruppe (30), die zumindest teilweise in der Kammer (36, 38) angeordnet ist, wobei die Kolbenbaugruppe (30) eine Kolbenstange (32) und einen Kolbenkopf (34) umfasst;
**dadurch gekennzeichnet, dass** das Aufhängungssystem (20) außerdem eine Magnetbaugruppe (48) umfasst, die mit der Kolbenstange (32) verbunden ist und einen Körper (54) umfasst
mit einer im Allgemeinen zylindrischen Form und mit einem oberen Abschnitt (56), der ebenfalls eine im Allgemeinen kreisförmige Form aufweist und neben dem distalen Ende der Kolbenstange (32) angeordnet ist, wobei sich der obere Abschnitt (56) ringförmig um die Achse (A) und von der Achse (A) radial nach außen erstreckt, der Körper (54) ferner einen unteren Abschnitt (58) aufweist, der sich von dem oberen Abschnitt (56) ringförmig um die Achse (A) zu einem proximalen Ende (60) radial nach außen erstreckt, wobei der Körper (54) ein Fach (62) definiert, der sich zwischen dem oberen Abschnitt (56) und dem proximalen Ende (60) erstreckt, um den Kolbenkopf (34) aufzunehmen
wobei die Magnetbaugruppe (48) Folgendes umfasst:
einen Kern (74), der einen Kernkopf (78) und einen Kernkörper (76) umfasst und sich in dem Fach (62) befindet;
eine Spule (80), die sich um den Kernkörper (76) erstreckt und einen Raum (82) definiert;
eine Spule (84), die innerhalb des Raums (82) um die Spule (80) gewickelt ist; und
eine Induktionsplatte (90), die zumindest teilweise zwischen der Spule (80) und dem Kernkopf (78) angeordnet ist,
wobei ein Betätigungselement (72) zumindest teilweise in dem Fach (62) angrenzend an den Kern (74) angeordnet und zwischen einer geschlossenen Position und einer offenen Position bewegbar ist, wobei der Körper (54) zumindest eine erste Öffnung (68) und zumindest eine zweite Öffnung (70) definiert, die axial von der zumindest einen ersten Öffnung (68) beabstandet ist, wobei in der geschlossenen Position, das Betätigungselement (72) einen Flüssigkeitsstrom von mindestens einer der ersten Öffnung (68) und der zweiten Öffnung (70) einschränkt, um eine steifere Dämpfungseigenschaft bereitzustellen, und in der offenen Position den Flüssigkeitsstrom durch die mindestens eine erste Öffnung (68) und die mindestens eine zweite Öffnung (70) zulässt, um eine weniger steife Dämpfungseigenschaft bereitzustellen.

2. Das Aufhängungssystem (20) nach Anspruch 1, wobei die Induktionsplatte (90) einen oberen Ringabschnitt (92) aufweist, der zwischen der Spule (80) und dem Kernkopf (78) angeordnet ist.

3. Das Aufhängungssystem (20) nach Anspruch 2, wobei der obere Ringabschnitt (92) einen Innendurchmesser aufweist, der radial einwärts von einem Innendurchmesser einer Umwicklung der Spule (84) angeordnet ist.

4. Das Aufhängungssystem (20) nach Anspruch 3, wobei der obere Ringabschnitt (92) einen Außendurchmesser aufweist, der sich radial außerhalb eines Außendurchmessers der Umwicklung der Spule (84) befindet.

5. Das Aufhängungssystem (20) nach einem der Ansprüche 2 bis 4, wobei die Induktionsplatte (90) einen Brückenabschnitt (94) aufweist, der sich von dem oberen Ringabschnitt (92) in anliegendem Eingriff um den Kernkopf (78) zum zweiten Ende (28) und weg von der Spule (84) erstreckt.

6. Das Aufhängungssystem (20) nach Anspruch 5, wobei die Induktionsplatte (90) ferner einen Hakenabschnitt (96) aufweist, der sich von dem Brückenabschnitt (94) radial nach außen erstreckt.

7. Das Aufhängungssystem (20) nach Anspruch 6, wobei zwischen dem Hakenabschnitt (96) und dem Brückenabschnitt (94) ein Zwischenraum definiert ist und wobei sich in dem Zwischenraum ein O-Ring (98) befindet.

8. Das Aufhängungssystem (20) nach einem der Ansprüche 1 bis 7, wobei sich eine Schweißnaht (100) zwischen der Induktionsplatte (90) und dem Kern (74) befindet und diese miteinander verbindet.

9. Das Aufhängungssystem (20) nach einem der Ansprüche 1 bis 8, wobei die Induktionsplatte (90) aus einem Material mit einer Leitfähigkeit von mindestens 1.100.000 Siemens/m besteht.

10. Das Aufhängungssystem (20) nach Anspruch 9, wobei die Induktionsplatte (90) aus Kupfer besteht.

11. Das Aufhängungssystem (20) nach Anspruch 9, wobei die Induktionsplatte (90) aus Aluminium besteht.

12. Das Aufhängungssystem (20) nach Anspruch 9, wobei die Induktionsplatte (90) aus rostfreiem Stahl besteht.

13. Das Aufhängungssystem (20) nach Anspruch 12, wobei sich der Körper (54) um die Spule (80), den Kern (74) und die Induktionsplatte (90) erstreckt, wobei der Körper (54) einen Kragenabschnitt (64) aufweist, der einen Kragenkanal (66) zur Aufnahme eines bereitgestellten Kabels (50) zur elektrischen Verbindung mit der Spule (84) definiert.

## Revendications

1. Un système de suspension (20) d'un véhicule associé, le système de suspension (20) comprenant:
un tube réservoir extérieur (24) s'étendant le long d'un axe (A) entre une première extrémité (26) et une seconde extrémité (28) et définissant une chambre (36, 38); et
un ensemble piston (30) au moins partiellement situé dans la chambre (36, 38), l'ensemble piston (30) comprenant une tige de piston (32) et une tête de piston (34);
**caractérisé en ce que** le système de suspension (20) comprend en outre un ensemble solénoïde (48) relié à la tige de piston (32) et comprenant un corps (54) ayant une forme généralement cylindrique, et ayant une partie supérieure (56), ayant également une forme généralement circulaire, disposée de manière adjacente à l'extrémité distale de la tige de piston (32), la partie supérieure (56) s'étendant de manière annulaire autour de l'axe (A) et radialement vers l'extérieur à partir de l'axe (A), le corps (54) comprenant en outre une partie inférieure (58) s'étendant radialement vers l'extérieur à partir de la partie supérieure (56), de manière annulaire autour de l'axe (A), jusqu'à une extrémité proximale (60), le corps (54) définissant un compartiment (62) s'étendant entre la partie supérieure (56) et l'extrémité proximale (60) pour recevoir la tête de piston (34)
dans lequel l'ensemble solénoïde (48) comprend:
un noyau (74) comprenant une tête de noyau (78) et un corps de noyau (76) et situé dans le compartiment (62);
une bobine (80) s'étendant autour du corps de noyau (76) et définissant un espace (82);
un enroulement (84) enroulée autour de la bobine (80) à l'intérieur de l'espace (82);
et une plaque d'induction (90) au moins partiellement située entre la bobine (80) et la tête de noyau (78),
dans lequel un actionneur (72) est au moins partiellement situé dans le compartiment (62) adjacent au noyau (74) et mobile entre une position fermée et une position ouverte, dans lequel le corps (54) définit au moins une première ouverture (68) et au moins une seconde ouverture (70) axialement espacée de l'au moins une première ouverture (68), dans lequel, en position fermée, l'actionneur (72) restreint l'écoulement du fluide à travers au moins une des premières ouvertures (68) et des secondes ouvertures (70) afin d'obtenir un amortissement plus rigide, et dans lequel, en position ouverte, il permet l'écoulement du fluide à travers au moins une première ouverture (68) et au moins une seconde ouverture (70) afin d'obtenir un amortissement moins rigide.

2. Le système de suspension (20) selon la revendication 1, dans lequel la plaque d'induction (90) comprend partie annulaire supérieure (92) située entre la bobine (80) et la tête de noyau (78).

3. Le système de suspension (20) selon la revendication 2, dans lequel la partie annulaire supérieure (92) comprend un diamètre intérieur situé radialement à l'intérieur d'un diamètre intérieur d'une spire de l'enroulement (84).

4. Le système de suspension (20) selon la revendication 3, dans lequel la partie annulaire supérieure (92) comprend un diamètre extérieur situé radialement à l'extérieur du diamètre extérieur de la spire de l'enroulement (84).

5. Le système de suspension (20) selon l'une des revendications 2 à 4, dans lequel la plaque d'induction (90) comprend une partie de pont (94) s'étendant de la partie annulaire supérieure (92) en prise serrée autour de la tête de noyau (78) vers la seconde extrémité (28) et à l'écart de l'enroulement (84).

6. Le système de suspension (20) selon la revendication 5, dans lequel la plaque d'induction (90) comprend en outre une partie crochet (96) s'étendant radialement vers l'extérieur à partir de la partie pont (94).

7. Le système de suspension (20) selon la revendication 6, dans lequel un espace est défini entre la partie crochet (96) et la partie pont (94) et dans lequel un joint torique (98) est situé dans l'espace.

8. Le système de suspension (20) selon l'une des revendications 1 à 7, dans lequel une interface de soudage (100) est située entre et relie la plaque d'induction (90) et le noyau (74).

9. Le système de suspension (20) selon l'une quelconque des revendications 1 à 8, dans lequel la plaque d'induction (90) est formée d'un matériau ayant une conductivité d'au moins 1 100 000 Siemens/m.

10. Le système de suspension (20) selon la revendication 9, dans lequel la plaque d'induction (90) est formée de cuivre.

11. Le système de suspension (20) selon la revendication 9, dans lequel la plaque d'induction (90) est formée d'aluminium.

12. Le système de suspension (20) selon la revendication 9, dans lequel la plaque d'induction (90) est formée d'acier inoxydable.

13. Le système de suspension (20) selon la revendication 12, dans lequel le corps (54) s'étend autour de la bobine (80), du noyau (74) et de la plaque d'induction (90), dans lequel le corps (54) comprend une partie de collier (64) définissant un canal de collier (66) pour accueillir un câble fourni (50) pour se connecter électriquement à l'enroulement (84).
